# EUROPEAN PATENT APPLICATION

(11) **EP 2 690 772 A2**
(43) Date of publication of application: **29.01.2014**
(21) Application number: 13154898.4
(22) Date of filing: 12.02.2013
(51) Int. Cl.: H02M 3/158, G09G 3/32

(54) **Voltage generator, driving method for the voltage generator, and organic light emitting display device using the same**

(30) Priority: 26.07.2012 KR 20120081869
(71) Applicant: Samsung Display Co., Ltd., Yongin-City, Gyeonggi-Do, 446-711 (KR)
(72) Inventor: Choi, Hak-Ki, Gyunggi-Do (KR)
(74) Representative: Walaski, Jan Filip

(57) **Abstract**

A voltage generator includes a DC/DC converter (172) and first (T1) to third (T3) transistors. The DC/DC converter outputs a first voltage (V1) during a first period of a frame and does not output the first voltage (V1) during other periods of the frame. The first transistor (T1) is coupled between the DC/DC converter (172) and an output terminal (173), and is configured to be turned on during the first period. The second transistor (T2) is coupled between the output terminal (173) and a third voltage source (V3) that supplies a third voltage lower than the first voltage (V1), and is configured to be turned on during a second period of the frame. The third transistor (T3) is coupled between the output terminal (173) and a second voltage source (V2) that supplies a second voltage identical to or lower than the first voltage (V1), and is configured to be turned on during a third period of the frame.

## Description

The present invention relates to a voltage generator, a method of driving a voltage generator and an organic light emitting display device using the same, and more particularly, to a driving method of a voltage generator and an organic light emitting display device using the same, which can improve display quality.

Generally, organic light emitting displays are classified into a passive matrix organic light emitting display (PMOLED) and an active matrix organic light emitting display (AMOLED), depending on a method of driving organic light emitting diodes.

The AMOLED includes a plurality of scan lines, a plurality of data lines, a plurality of power lines and a plurality of pixels connected to these lines and arranged in a matrix form. Each of the pixels generally includes an organic light emitting diode, a driving transistor for controlling the amount of current supplied to the organic light emitting diode, a switching transistor for transmitting a data signal to the driving transistor, and a storage capacitor for maintaining the voltage of the data signal.

The organic light emitting display device has low power consumption. However, in the organic light emitting display device, the intensity of current flowing through the organic light emitting diode is changed depending on a voltage between gate and source electrodes of the driving transistor for driving the organic light emitting diode, i.e., a variation in the threshold voltage of the driving transistor, and therefore, display inequality is caused.

There is currently proposed a method of driving an organic light emitting display device while changing the voltage of driving power (first power ELVDD and second power ELVSS) during one frame so as to overcome inequality between pixels and simplify the structure of the pixels. When the voltage of the driving power is changed, the threshold voltage of a driving transistor may be compensated while minimizing the number of transistors included in the pixel. However, when the voltage of the driving power is changed, power consumption is increased and stability is decreased. Therefore, display quality may be deteriorated.

One or more embodiments may provide a voltage generator, including: a DC/DC converter that outputs a first voltage during a first period of one frame, and does not output the first voltage during the other periods; a first transistor coupled between the DC/DC converter and an output terminal, the first transistor being configured to be turned on during the first period; a second transistor coupled between the output terminal and a third voltage source that supplies a third voltage lower than the first voltage, the second transistor being configured to be turned on during a second period of the frame; and a third transistor coupled between the output terminal and a second voltage source that supplies a second voltage identical to or lower than the first voltage, the third transistor being configured to be turned on during a third period of the frame.

The second voltage may be a voltage higher than the third voltage. The DC/DC converter may include fourth and fifth transistors coupled in series between a first power voltage and a second power voltage lower than the first power voltage; an inductor coupled between the first transistor and a common nod between the fourth and fifth transistors; and a controller that controls turn-on and turn-off of the fourth and fifth transistors. The controller may alternately turn on and turn off the fourth and fifth transistors during the first period, and may set the fourth and fifth transistors to be respectively in turn-off and turn-on states during the second and third periods except the first period.

One or more embodiments may provide a voltage generating method, including: supplying a first voltage to an output terminal while alternately turning on and turning off fourth and fifth transistors so that the amount of current flowing in an inductor during a first period of one frame; and maintaining any one of the fourth and fifth transistors to be in a turn-on state during the other periods of the frame except the first period.

The voltage generating method may further include supplying a third voltage lower than the first voltage to the output terminal during a second period of the frame; and supplying a second voltage between the first and third voltages to the output terminal during a third period of the frame. The fourth and fifth transistors may be coupled in series between a first power voltage and a second power voltage lower than the first power voltage, and the fifth transistor coupled to the second power voltage may maintain a turn-on state during the other periods of the frame.

One or more embodiments may provide an organic light emitting display device, including: pixels coupled between scan lines and data lines; a second voltage generator that supplies a low-level second voltage to the pixels during an emission period of one frame and supplies a high-level second voltage to the pixels during a non-emission period of the frame; and a first voltage generator that supplies a first power having a first voltage to the pixels during the emission period and supplies the first power having a voltage lower than the first voltage to the pixels during the non-emission period, wherein the first voltage generator outputs the first voltage during the emission period, and does not output the first voltage during the non-emission period.

The first voltage generator may include the DC/DC converter; a first transistor coupled between the DC/DC converter and an output terminal so as to be turned on the emission period; a second transistor coupled between the output terminal and a third voltage source that supplies a third voltage lower than the first voltage so as to be turned on during a portion of the non-emission period; and a third transistor coupled between the output terminal and a second voltage source that supplies a second voltage identical to or lower than the first voltage so as to be turned on during the other periods of the non-emission period except the portion of the non-emission period. The second voltage may be a voltage higher than the third voltage. The second voltage may be a high-level voltage of second power.

The DC/DC converter may include fourth and fifth transistors coupled in series between a first power voltage and a second power voltage lower than the first power voltage; an inductor coupled between the first transistor and a common node between the fourth and fifth transistors; and a controller that controls turn-on and turn-off of the fourth and fifth transistors. The controller may alternately turn on and turn off the fourth and fifth transistors during the emission period. The controller may set the fifth and fourth transistors that output the second power voltage to be respectively in a turn-on state and a turn-off during the non-emission period. The organic light emitting display device may further include a timing controller that supplies an enable signal to the first voltage generator during the emission period.

Features will become apparent to those of ordinary skill in the art by describing in detail exemplary embodiments with reference to the attached drawings in which:
FIG. 1 illustrates a diagram of an organic light emitting display device according to an embodiment;
FIG. 2 illustrates a diagram of a driving method of the organic light emitting display device according to an embodiment;
FIG. 3 illustrates a circuit diagram of an embodiment of a pixel shown in FIG. 1;
FIG. 4 illustrates a waveform diagram of an embodiment of first and second voltages, supplied during a frame;
FIG. 5 illustrates a circuit diagram of a first voltage generator according to an embodiment;
FIG. 6 illustrates a circuit diagram of an embodiment of a DC/DC converter shown in FIG. 5;
FIG. 7 illustrates a waveform diagram of a driving process of the DC/DC converter shown in FIG. 6; and
FIG. 8 illustrates a waveform diagram of another embodiment of the first and second voltages, supplied during the frame.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art. Here, when a first element is described as being coupled to a second element, the first element may be not only directly coupled to the second element but may also be indirectly coupled to the second element via a third element. Further, some of the elements that are not essential to the complete understanding of embodiments may be omitted for clarity. Also, like reference numerals refer to like elements throughout.

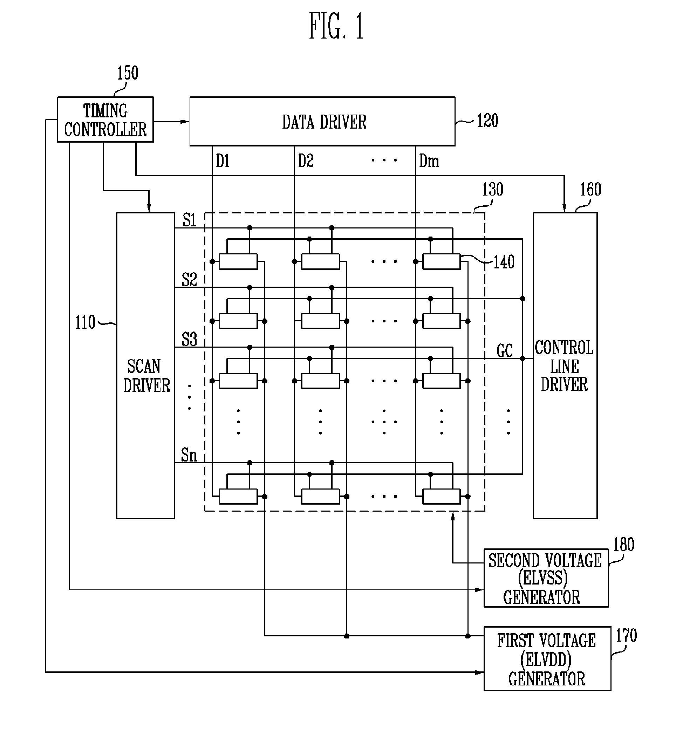

FIG. 1 illustrates a diagram of an organic light emitting display device according to an embodiment. Referring to FIG. 1, the organic light emitting display device according to this embodiment includes a pixel unit 130 having pixels 140 positioned at intersections of scan lines S1 to Sn, a control line GC, and data lines D1 to Dm, a scan driver 110 for driving the scan lines S1 to Sn, a control line driver 160 for driving the control line GC, a data driver 120 for driving the data lines D1 to Dm, and a timing controller 150 for controlling the scan driver 110, the data driver 120, and the control line driver 160.

The organic light emitting display device according to this embodiment further includes a first voltage generator 170 for supplying a first voltage ELVDD to the pixels 140 and a second voltage generator 180 for supplying a second voltage ELVSS to the pixels 140. The scan driver 110 simultaneously and/or progressively supplies a scan signal to the scan lines S1 to Sn. For example, the scan driver 110 simultaneously supplies the scan signal to the scan lines S1 to Sn during a threshold voltage compensation period in one frame and progressively supplies the scan signal to the scan lines S1 to Sn during a scan period in the one frame.

The data driver 120 supplies a data signal to the data lines D1 to Dm in synchronization with the scan signal during the scan period.

The control line driver 160 supplies a control signal to the control line GC during the threshold voltage compensation period. The scan signal, the control signal, or the like is set to a voltage at which a transistor included in each pixel 140 can be turned on.

The pixel unit 130 has the pixels 140 positioned at intersections of the scan lines S1 to Sn and the data lines D1 to Dm. The pixels 140 receive the first and second voltages ELVDD and ELVSS respectively supplied from the first and second voltage generators 170 and 180. The pixel 140 controls the amount of current supplied from the first voltage ELVDD to the second voltage ELVSS via an organic light emitting diode, corresponding to the data signal during an emission period in the one frame. Then, light having a predetermined luminance is generated from the organic light emitting diode.

The first voltage generator 170 supplies the first voltage ELVDD to the pixels 140. Here, the first voltage generator 170 supplies the first voltage ELVDD having a plurality of voltage levels during the one frame. The detailed configuration and operation of the first voltage generator 170 will be described later.

The second voltage generator 180 supplies the second voltage ELVSS to the pixels. Here, the second voltage generator 180 supplies a low-level second voltage ELVSS during the emission period and supplies a high-level second voltage ELVSS during the other periods.

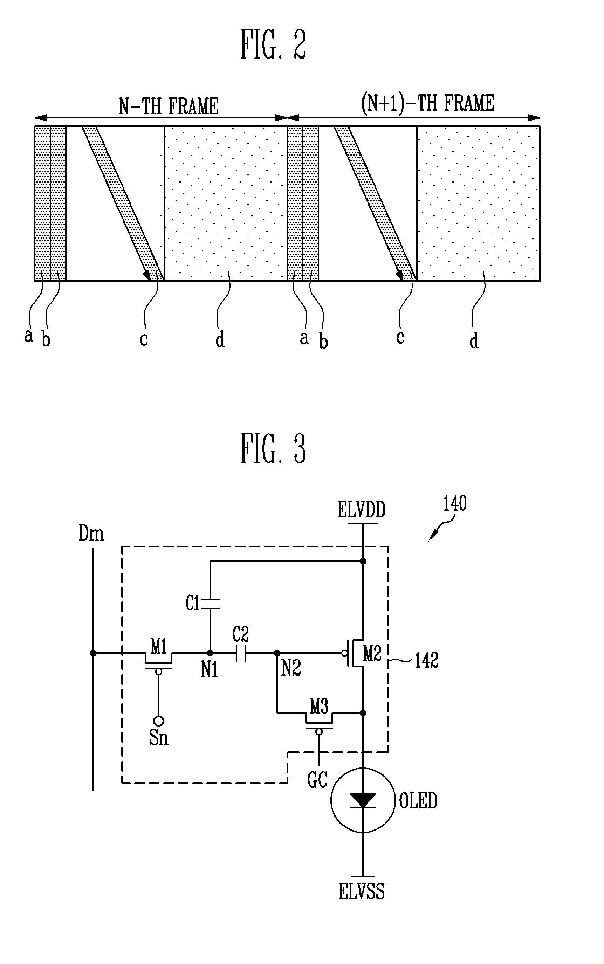

FIG. 2 is a diagram illustrating a driving method of the organic light emitting display device according to an embodiment.

Referring to FIG. 2, the organic light emitting display device according to this embodiment is driven using a simultaneous emission method. Generally, driving methods are divided into a progressive emission method and a simultaneous emission method. The progressive emission method refers to a method in which data is progressively input for each scan line, and pixels for each horizontal line progressively emit light in the same order in which the data is input.

The simultaneous emission method refers to a method in which data is progressively input for each scan line, and the pixels simultaneously emit light after the data is input to all the pixels. One frame driven using the simultaneous emission method, is divided into a reset period 'a,' a threshold voltage compensation period 'b,' a scan period 'c' and an emission period 'd.' Here, pixels 140 for each scan line are progressively driven during the scan period 'c,' and all the pixels 140 are simultaneously driven during the reset period 'a,' the threshold voltage compensation period 'b,' and the emission period 'd,' i.e., all periods except the scan period 'c.'

The reset period 'a' is a period in which the voltage of a gate electrode of a driving transistor included in each pixel 140 is initialized. In other words, the gate electrode of the driving transistor is initialized to a low voltage during the reset period.

The threshold voltage compensation period 'b' is a period in which the threshold voltage of the driving transistor is compensated. A voltage corresponding to the threshold voltage of the driving transistor is charged in each pixel 140 during the threshold voltage compensation period.

The scan period 'c' is a period in which a data signal is supplied to each pixel 140. A voltage corresponding to the data signal is charged in each pixel 140 during the scan period.

The emission period 'd' is a period in which the pixels 140 emit light, corresponding to the data signal supplied during the scan period.

In the driving method of the present embodiment, the operation periods 'a' to 'd' are temporally clearly divided, and hence it is possible to decrease the number of transistors of a compensation circuit provided to each pixel 140 and the number of signal lines for controlling the transistors. Further, since the operation periods 'a' to 'd' are temporally clearly divided, a shutter glass type 3D display can be easily implemented.

FIG. 3 illustrates a circuit diagram of an embodiment of the pixel shown in FIG. 1. For convenience of illustration, a pixel coupled to an n-th scan line Sn and an m-th data line Dm is illustrated in FIG. 3.

Referring to FIG. 3, the pixel 140 according to this embodiment includes an organic light emitting diode OLED and a pixel circuit 142 that controls the amount of current supplied to the organic light emitting diode OLED.

An anode electrode of the organic light emitting diode OLED is coupled to the pixel circuit 142 and a cathode electrode of the organic light emitting diode OLED is coupled to the second voltage ELVSS. The organic light emitting diode OLED generates light having a predetermined luminance, corresponding to the current supplied from the pixel circuit 142.

The pixel circuit 142 charges a data signal and a voltage corresponding to the threshold voltage of a driving transistor, and controls the amount of the current supplied to the organic light emitting diode OLED, corresponding to the charged voltage. To this end, the pixel circuit 142 includes three transistors M1 to M3 and two capacitors C1 and C2.

A gate electrode of the first transistor M1 is coupled to the scan line Sn, and a first electrode of the first transistor M1 is coupled to the data line Dm. A second electrode of the first transistor M1 is coupled to a first node N1. When a scan signal is supplied to the scan line Sn, the first transistor M1 is turned on to electrically connect the data line and the first node N1 to each other.

A gate electrode of the second transistor (driving transistor) M2 is coupled to a second node N2 and a first electrode of the second transistor M2 is coupled to the first voltage ELVDD. A second electrode of the second transistor M2 is coupled to the anode electrode of the organic light emitting diode OLED. The second transistor M2 controls the amount of the current supplied to the organic light emitting diode OLED, corresponding to the voltage applied to the second node N2.

A first electrode of the third transistor M3 is coupled to the second electrode of the second transistor M2 and a second electrode of the third transistor M3 is coupled to the second node N2. A gate electrode of the third transistor M3 is coupled to the control line GC. When a control signal is supplied to the control line GC, the third transistor M3 is turned on to diode-connect the second transistor M2.

The first capacitor C1 is coupled between the first node N1 and the first voltage ELVDD. The first capacitor C1 charges a voltage corresponding to the data signal.

The second capacitor C2 is coupled between the first and second nodes N1 and N2. The second capacitor charges a voltage corresponding to the threshold voltage of the second transistor M2.

The pixel 140 displays a predetermined image while passing through the reset period, the threshold voltage compensation period, the scan period and the emission period, described above. Here, the pixel 140 is set to be in a non-emission state during the reset period, the threshold voltage compensation period, and the scan period, i.e., all periods except the emission period.

The pixel 140 may be variously driven, corresponding to the scan signal supplied to the scan lines S1 to Sn, the control signal supplied to the control line GC and the voltage levels of the first and second voltages ELVDD and ELVSS.

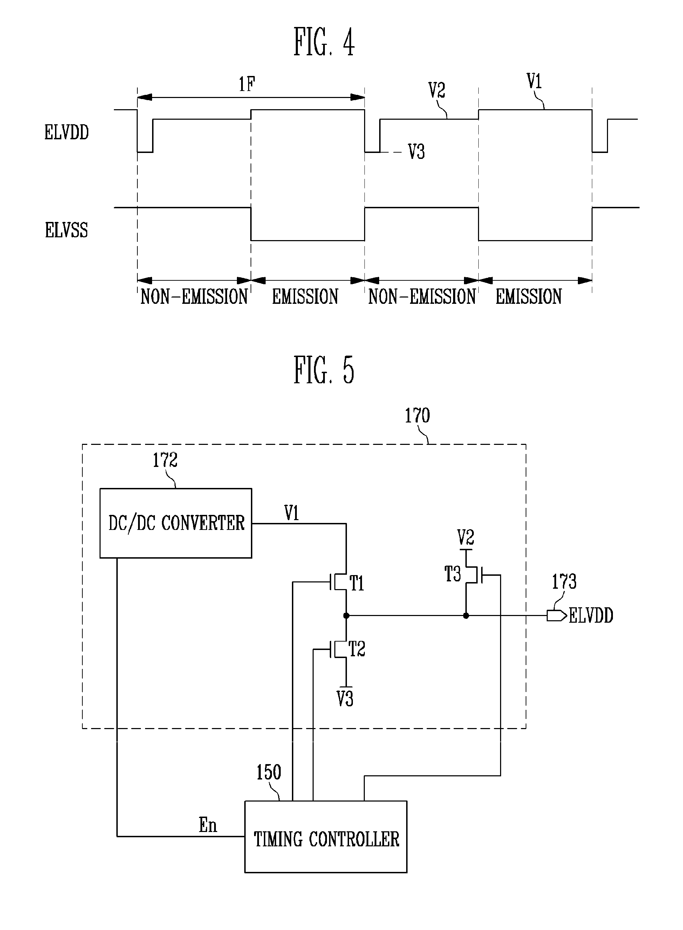

FIG. 4 illustrates a waveform diagram of an embodiment of first and second voltages, supplied during a frame.

Referring to FIG. 4, the second voltage ELVSS is set to a high-level second voltage ELVSS during a non-emission period and to a low-level second voltage ELVSS during an emission period. Here, the value of the high-level second voltage ELVSS is set so that the pixels 140 are in a non-emission state and the value of the low-level second voltage ELVSS is set so that the pixels 140 are in an emission state.

The first voltage ELVDD is set to a third voltage V3 during a portion of the non-emission period, e.g., the reset period in the frame. In this case, the third voltage V3 is used as a voltage for initializing the gate electrode of the driving transistor.

The first voltage ELVDD is set to a second voltage V2 during the other periods of the non-emission period, e.g., the threshold voltage compensation period and the scan period. In this case, the second voltage V2 is used to charge the threshold voltage of the driving transistor and the voltage corresponding to the data signal in each capacitor. To this end, the second voltage V2 is set to a voltage higher than the third voltage V3.

The first voltage ELVDD is set to a first voltage V1 during the emission period. In this case, the first voltage V1 is used to supply current to the pixels 140. To this end, the first voltage V1 is set to a voltage higher than the second voltage V2.

FIG. 5 illustrates a circuit diagram of the first voltage generator 170 according to an embodiment. Referring to FIG. 5, the first voltage generator 170 according to this embodiment includes a DC/DC converter 172, a first transistor T1, a second transistor T2, and a third transistor T3.

The DC/DC converter 172 outputs the first voltage V1 while being driven during a period in which an enable signal En is supplied from the timing controller 150, i.e., during the emission period. The DC/DC converter 172 does not output the first voltage V1 during a period in which the enable signal En is not supplied from the timing controller 150, i.e., during the non-emission period.

The first transistor T1 is coupled between the DC/DC converter 172 and an output terminal 173. The first transistor T1 supplies the first voltage V1 to the output terminal 173 during the emission period, corresponding to the control of the timing controller 150.

The second transistor T2 is coupled between the output terminal 173 and a third voltage source V3. The second transistor T2 supplies the third voltage V3 to the output terminal 173 during a portion of the non-emission period, corresponding to the control of the timing controller 150.

The third transistor T3 is coupled between the second voltage source V2 and the output terminal 173. The third transistor T3 supplies the second voltage V2 to the output terminal 173 during the other periods except the portion of the non-emission period, corresponding to the control of the timing controller 150.

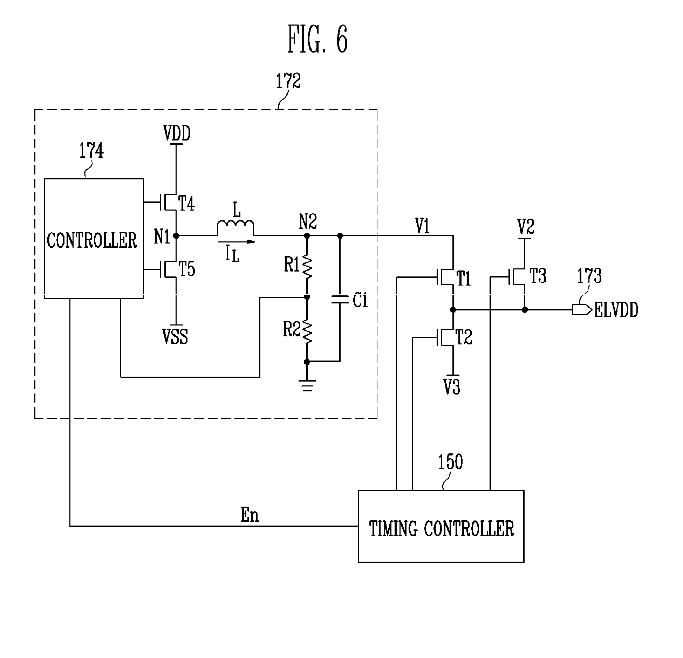

FIG. 6 illustrates a circuit diagram showing an embodiment of the DC/DC converter 172 shown in FIG. 5.

Referring to FIG. 6, the DC/DC converter 172 according to this embodiment includes a controller 174, fourth and fifth transistors T4 and T5, coupled between first power voltage VDD and a second power voltage VSS, an inductor L coupled between first and second nodes N1 and N2, first and second resistors R1 and R2 coupled in series between the second node N2 and a ground voltage, and a first capacitor C1 coupled between the second node N2 and the ground voltage. Here, the first node N1 is a common node of the fourth and fifth transistors T4 and T5, and the second node N2 is a node coupled to the first transistor T1.

The fourth and fifth transistors T4 and T5 are coupled in series between the first and second power voltages VDD and VSS. The fourth and fifth transistors T4 and T5 are turned on or turned off, corresponding to the control of the controller 174.

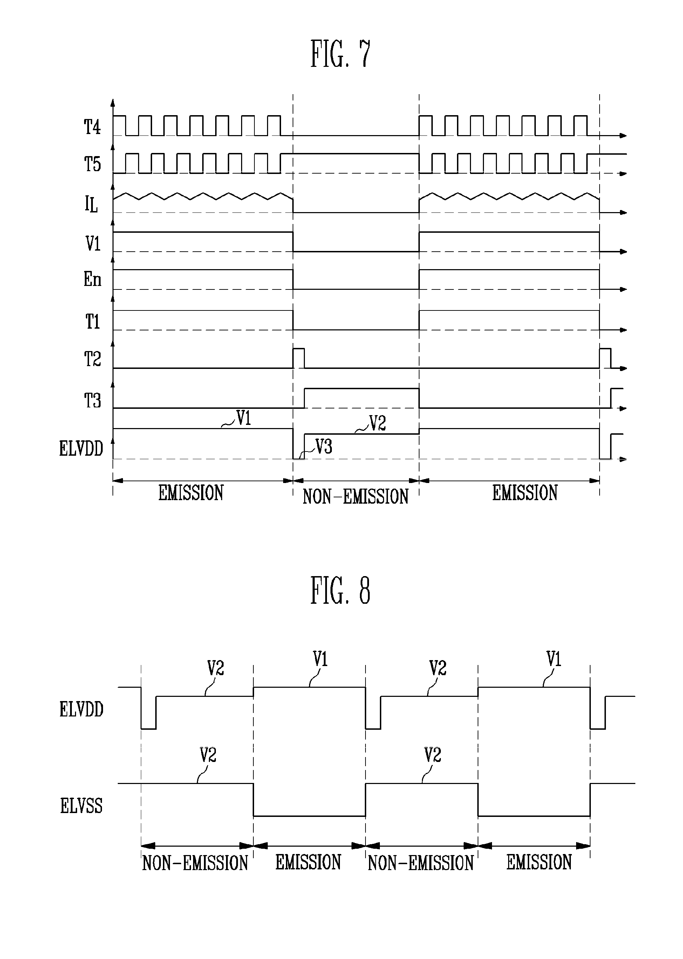

The controller 174 controls the fourth and fifth transistors T4 and T5 so that a predetermined voltage, i.e., the first voltage V1, is applied to the second node N2, while alternately turning on or off the fourth and fifth transistors T4 and T5 during the emission period in which the enable signal En is supplied as shown in FIG. 7. To this end, the voltage applied to the common node between the first and second resistors R1 and R2 is fed back to the controller 174 during the emission period. The controller 174 sets the fourth and fifth transistors T4 and T5 to be respectively in turn-on and turn-off states during the non-emission period in which the enable signal En is not supplied.

That is, in this embodiment, the DC/DC converter 172 outputs the first voltage V1 while alternately turning on and off the fourth and fifth transistors T4 and T5 during the emission period. The DC/DC converter 172 maintains the fifth and fourth transistors T5 and T4 to be respectively in turn-on and turn-off states during the non-emission period. In this case, the first voltage V1 is not output during the non-emission period.

If the DC/DC converter 172 is set to be in a non-driving state during the non-emission period, the power consumption of the DC/DC converter 172 is decreased, and simultaneously, the electrical energy of the DC/DC converter 172 is minimized. Experimentally, if the emission and non-emission periods are set to 40%: 60% or so, the power consumption and electrical energy of the DC/DC converter is decreased to about 20 to 30%.

Meanwhile, as shown in FIG. 7, the second transistor T2 is turned on during the initial period of the non-emission period so that the third voltage V3 is output to the output terminal 173, and the third transistor T3 is turned on during the other periods except the portion of the non-emission period so that the second voltage V2 is output to the output terminal 173. Further, during an entirety of the non-emission period, the fourth transistor T4 is turned on and the fifth transistor T5 is turned off.

In this embodiment, the second voltage V2 is supplied to the output terminal 173 during the other periods except the portion of the non-emission period so that the DC/DC converter 172 is set to be in a non-driving state during the non-emission period. Here, the second voltage V2 may be set to a voltage between the first and third voltages V1 and V3 among various voltages supplied to the system. For example, in this embodiment, the high-level second voltage ELVSS may be used as the second voltage V2 as shown in FIG. 8.

By way of summation and review, according to embodiments, the DC/DC converter is set to be in a non-driving state during a non-emission period of one frame. Accordingly, heat emission and power consumption may be reduced. In other words, transistors included in the DC/DC converter so as to control the amount of current supplied to an inductor are fixed to be in a turn-on or turn-off state during the non-emission period. If the transistors are fixed to be in the turn-on or turn-off state, the power consumed by the transistors and the power consumed by the inductor, and the like can be reduced, and accordingly, heat emission can be lowered.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A voltage generator, comprising:
a DC/DC converter that outputs a first voltage during a first period of a frame and does not output the first voltage during other periods of the frame;
a first transistor coupled between the DC/DC converter and an output terminal, the first transistor being configured to be turned on during the first period;
a second transistor coupled between the output terminal and a third voltage source that supplies a third voltage lower than the first voltage, the second transistor being configured to be turned on during a second period of the frame; and
a third transistor coupled between the output terminal and a second voltage source that supplies a second voltage identical to or lower than the first voltage, the third transistor being configured to be turned on during a third period of the frame.

2. The voltage generator as claimed in claim 1, wherein the second voltage is a voltage higher than the third voltage.

3. The voltage generator as claimed in claim 1 or 2, wherein the DC/DC converter comprises:
fourth and fifth transistors coupled in series between a first power supply voltage and a second power supply voltage lower than the first power supply voltage;
an inductor coupled between the first transistor and a common node between the fourth and fifth transistors; and
a controller that controls a state of the fourth and fifth transistors.

4. The voltage generator as claimed in claim 3, wherein the controller alternately turns on and turns off the fourth and fifth transistors during the first period, and sets the fourth and fifth transistors to be respectively in turn-off and turn-on states during the second and third periods.

5. The voltage generator as claimed in claim 3 or 4, further comprising a pair of resistors coupled in series between the inductor and the first transistor and ground, a voltage at a common node of the pair of resistors being supplied to the controller.

6. A voltage generating method, comprising:
supplying a first voltage to an output terminal while alternately turning on and turning off fourth and fifth transistors so that current flows in an inductor during a first period of a frame; and
maintaining one of the fourth and fifth transistors to be in a turn-on state during periods of the frame other than the first period.

7. The voltage generating method as claimed in claim 6, further comprising:
supplying a third voltage lower than the first voltage to the output terminal during a second period of the frame; and
supplying a second voltage between the first and third voltages to the output terminal during a third period of the frame.

8. The voltage generating method as claimed in claim 6 or 7, wherein the fourth and fifth transistors are coupled in series between a first power supply voltage and a second power supply voltage lower than the first power supply voltage, and the fifth transistor coupled to the second power supply voltage maintains a turn-on state during other periods of the frame.

9. An organic light emitting display device, comprising:
pixels coupled between scan lines and data lines;
a first voltage generator that supplies a first voltage to the pixels during an emission period of a frame and supplies a voltage lower than the first voltage to the pixels during the non-emission period of the frame; and
a second voltage generator that supplies a low-level second voltage to the pixels during the emission period and supplies a high-level second voltage to the pixels during a non-emission period;
wherein the first voltage generator outputs the first voltage during the emission period and does not output the first voltage during the non-emission period.

10. The organic light emitting display device as claimed in claim 9, wherein the first voltage generator comprises:
a DC/DC converter;
a first transistor coupled between the DC/DC converter and an output terminal, the first transistor to be turned on during the first period;
a second transistor coupled between the output terminal and a third voltage source that supplies a third voltage lower than the first voltage, the second transistor to be turned on during a portion of the non-emission period; and
a third transistor coupled between the output terminal and a second voltage source that supplies a second voltage identical to or lower than the first voltage, the third transistor to be turned on during the non-emission period other than the portion of the non-emission period.

11. The organic light emitting display device as claimed in claim 10, wherein the second voltage is a voltage higher than the third voltage and/or wherein the second voltage is a high-level voltage of the second voltage generator.

12. The organic light emitting display device as claimed in claim 10 or 11, wherein the DC/DC converter comprises:
fourth and fifth transistors coupled in series between a first power supply voltage and a second power supply voltage lower than the first power supply voltage;
an inductor coupled between the first transistor and a common node between the fourth and fifth transistors; and
a controller that controls a state of the fourth and fifth transistors.

13. The organic light emitting display device as claimed in claim 12, wherein the controller alternately turns on and turns off the fourth and fifth transistors during the emission period and/or wherein the controller sets the fifth and fourth transistors that output the second power voltage to be respectively in a turn-on state and a turn-off during the non-emission period.

14. The organic light emitting display device as claimed in claim 12 or 13, further comprising a pair of resistors coupled in series between the inductor and the first transistor and ground, a voltage at a common node of the pair resistors being supplied to the controller.

15. The organic light emitting display device as claimed in any one of claims 9 to 14, further comprising a timing controller that supplies an enable signal to the first voltage generator during the emission period.
